# EUROPÄISCHE PATENTSCHRIFT

(11) **EP 3 205 531 B1**
(45) Veröffentlichungstag und Bekanntmachung des Hinweises auf die Patenterteilung: **11.12.2019**
(21) Anmeldenummer: 16203657.8
(22) Anmeldetag: 13.12.2016
(51) Int. Cl.: B60N 2/14

(54) **DREHEINHEIT FÜR EINE DREHVORRICHTUNG FÜR EINEN FAHRZEUGSITZ**
ROTATING UNIT FOR A ROTATING DEVICE FOR A VEHICLE SEAT
UNITÉ ROTATIVE POUR UN DISPOSITIF TOURNANT POUR UN SIÈGE DE VÉHICULE

(30) Priorität: 12.02.2016 DE 102016102451
(43) Veröffentlichungstag der Anmeldung: 16.08.2017
(73) Patentinhaber: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Otten, Roth, Dobler & Partner mbB Patentanwälte

(56) Entgegenhaltungen:
- WO-A1-2012/116785
- DE-A1- 10 163 736
- DE-B4-102011 055 010
- DE-T2- 69 529 396
- DE-U1-202011 051 401

## Beschreibung

Die Erfindung betrifft eine Drehvorrichtung für einen Fahrzeugsitz mit einer Dreheinheit.

### Stand der Technik

Eine Dreheinheit für eine Drehvorrichtung für einen Fahrzeugsitz der einleitend bezeichneten Art ist in vielfältigen Ausführungsformen bereits bekannt. Die WO 2012/116785 zeigt beispielsweise eine Drehvorrichtung mit einem Basisbauteil und einem Sitzteilträger, wobei die beiden Teile mittels einer Drehvorrichtung um eine Schwenkachse schwenkbar vorhanden sind.

In Reisemobilen werden zum Beispiel Fahrzeugsitze eingesetzt, die sich drehen lassen, um den Fahrzeugsitz bei Stillstand des Fahrzeugs in einer anderen Position nutzen zu können.

Eine bekannte Dreheinheit für eine Vorrichtung zum Drehen eines Fahrzeugsitzes umfasst zwei zueinander drehbar angeordnete Drehflansche, wobei ein unten liegender Drehflansch der Dreheinheit über eine Verschiebeplatte der Vorrichtung fest mit dem Fahrzeug verbunden ist und ein oben liegender Drehflansch mittels einer Verbindungsplatte der Vorrichtung fest mit dem Fahrzeugsitz verbunden ist. Durch die feste Verbindung der Drehflansche der Dreheinheit mit der Verschiebeplatte und der Verbindungsplatte der Drehvorrichtung wird eine vergleichsweise hohe Festigkeit der Drehvorrichtung erreicht.

### Aufgabe und Vorteile der Erfindung

Der Erfindung liegt die Aufgabe zu Grunde, eine alternative und vergleichsweise kostengünstige Drehvorrichtung zur Verfügung zu stellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Drehvorrichtung für einen Fahrzeugsitz aus, wobei die Drehvorrichtung einen Unterbau für ein Bodenteil zur Anbringung an einem Fahrzeugboden und einen Überbau, an welchem ein Sitz anbringbar ist, umfasst, wobei der Unterbau mit dem Überbau über die Dreheinheit verbindbar ist, wobei eine Dreheinheit vorhanden ist und die Dreheinheit ein erstes Lagermittel umfasst.

Die Drehvorrichtung ist insbesondere dazu vorgesehen den Fahrzeugsitz drehbar am Fahrzeugboden anzuordnen.

Der wesentliche Aspekt der Erfindung ist nun darin zu sehen, dass das erste Lagermittel als Gleitlager ausgebildet ist und im montierten Zustand der Dreheinheit zwischen dem Überbau und dem Unterbau angeordnet ist, wobei der Überbau und der Unterbau im Bereich um eine Rotationsachse der Drehvorrichtung eine Durchgangsöffnung aufweisen, und dass das erste Lagermittel im angeordneten Zustand an der Drehvorrichtung in einer radialen Richtung, in Richtung der Rotationsachse der Drehvorrichtung über einen inneren Rand des Überbaus und des Unterbaus übersteht.

Durch die vorteilhafte Ausgestaltung der Dreheinheit ist ein Zusammenbau der Drehvorrichtung erleichtert. Auch ist eine Produktion der Dreheinheit dadurch vergleichsweise kostengünstig.

Mit überstehen ist z.B. gemeint, dass das Lagermittel in einer radialen Richtung, in Richtung der Rotationsachse der Drehvorrichtung, zwischen dem Überbau und dem Unterbau hervortritt und somit beispielsweise für einen Nutzer sichtbar ist. Zum Beispiel springt das Lagermittel im montierten Zustand an der Drehvorrichtung aus einer senkrechten Sicht von oben oder unten auf den Überbau bzw. den Unterbau gesehen im Bereich der Durchgangsöffnung zwischen dem Überbau und dem Unterbau hervor.

Mit überstehen kann auch gemeint sein, dass das erste Lagermittel derart ausgebildet ist und im montierten Zustand an der Drehvorrichtung derart montiert ist, dass es den inneren Rand des Überbaus und/oder des Unterbaus zumindest teilweise überdeckt.

Vorteilhafterweise ist das erste Lagermittel flach bzw. scheibenartig ausgebildet, insbesondere ist es ringartig ausgebildet. Das erste Lagermittel kann auch aus insbesondere flachen scheibenförmigen und/oder flachen ringförmigen Elementen bzw. Segmenten bestehen.

Überdies ist es vorteilhaft, dass das erste Lagermittel als Gleitlager ausgebildet ist und im montierten Zustand der Dreheinheit zwischen dem Überbau und dem Unterbau angeordnet ist, und dass das erste Lagermittel ein Montageorgan umfasst, wobei das Montageorgan dazu ausgelegt ist, das erste Lagermittel mit dem Überbau und/oder dem Unterbau für eine radiale Positionierung des ersten Lagermittels zu verbinden.

Durch die Ausbildung des ersten Lagermittels als Gleitlager ist das erste Lagermittel vergleichsweise einfach und/oder günstig herzustellen. Außerdem ist durch die Ausbildung des ersten Lagermittels die Drehvorrichtung vergleichsweise stabil ausgestaltet.

Zum Beispiel sind im montierten Zustand der Drehvorrichtung die sich zugewandten Flächen des Überbaus und des Unterbaus über einen vergleichsweise großen Bereich durchgehend eben und flach ausgestaltet. Die Flächen können gegebenenfalls von Durchbrüchen bspw. für das Montageorgan unterbrochen sein. Bevorzugterweise sind die im montierten Zustand der Drehvorrichtung sich zugewandte Flächen des Überbaus und des Unterbaus parallel zueinander ausgerichtet.

Der Überbau und/oder der Unterbau ist bevorzugterweise plattenförmig ausgestaltet, beispielsweise als vergleichsweise stabile Metallplatte.

Vorteilhafterweise ist das Montageorgan derart ausgestaltet, dass im montierten Zustand der Dreheinheit der Überbau mit dem Unterbau beweglich verbindbar und/oder koppelbar ist. Der Überbau ist z.B. auf dem Unterbau lagerbar.

Bevorzugterweise ist das erste Lagermittel durch das Montageorgan im montierten Zustand fest und unbeweglich mit dem Unterbau oder dem Überbau gekoppelt.

Ein Montageorgan ist beispielsweise als Schlitz, Bohrung, insbesondere Durchgangsbohrung und/oder als abstehendes Element, beispielsweise als insbesondere umlaufender Wulst oder insbesondere umlaufende Lippe oder als abstehender Stift ausgebildet.

Idealerweise umfasst der Unterbau und/oder der Überbau und/oder das Lagermittel eine Führungsbahn. Im montierten Zustand der Dreheinheit kann das Montageorgan des Lagerorgans derart in die Führungsbahn des Überbaus und/oder des Unterbaus eingreifen, sodass das Lagerorgan und/oder der Überbau und/oder der Unterbau ausschließlich zueinander drehbar geführt sind. Auch ist es bedeutsam, dass ein Montageelement des Überbaus und/oder des Unterbaus derart in die Führungsbahn des Lagermittels eingreifen kann, sodass das Lagermittel und/oder der Überbau und/oder der Unterbau ausschließlich zueinander drehbar geführt sind.

Überdies von Vorteil ist, dass das erste Lagermittel in einem Querschnitt T-förmig ausgestaltet ist.

Beispielsweise ist das Lagermittel in Form einer Unterlegscheibe ausgebildet und besitzt an einem radial innen liegenden Rand einen Wulst, so dass das erste Lagermittel in einem Querschnitt senkrecht zu einer Rotationsachse betrachtet in Form eines liegenden T's ausgestaltet ist.

Durch eine derartige Ausbildung des ersten Lagermittels ist es möglich das erste Lagermittel im montierten Zustand an der Drehvorrichtung in einer Weise anzubringen, dass eine Bewegung senkrecht zu einer Rotationsachse der Drehvorrichtung blockiert ist. Insbesondere liegt das erste Lagermittel mit einer radial außen liegenden Seite des Wulstes am inneren Rand des Überbaus und/oder des Unterbaus an, hierdurch ist eine Bewegung des ersten Lagemittels in radialer bzw. horizontaler Richtung insbesondere senkrecht zur Rotationsachse insbesondere aus seiner Funktionsposition heraus unterbunden.

Erfindungsgemäß weist die Dreheinheit zwei weitere Lagermittel auf, wobei die weiteren Lagermittel derart ausgebildet sind, dass im montierten Zustand der Dreheinheit an der Drehvorrichtung der Überbau und/oder der Unterbau relativ zum weiteren Lagermittel bewegbar, insbesondere drehbar ist.

Vorteilhafterweise ist das weitere Lagermittel flach, insbesondere scheibenartig bzw. ringförmig ausgestaltet. Beispielsweise kann das weitere Lagermittel scheibenartig und/oder ringförmig, zum Beispiel in Form einer Unterlegscheibe ausgebildet sein. Auch ist es vorstellbar, dass das weitere Lagermittel aus Segmenten besteht.

Erfindungsgemäß ist das weitere Lagermittel als Gleitlager ausgebildet.

Weiter wird vorgeschlagen, dass die Lagermittel derart ausgestaltet sind, dass sie relativ zueinander bewegbar, insbesondere drehbar sind.

Bevorzugterweise ist wenigstens das erste Lagermittel zu einem weiteren Lagermittel drehbar gelagert. Beispielsweise besitzt das erste Lagermittel zu einem weiteren Lagermittel eine Kontaktfläche, wobei das erste Lagermittel zu dem weiteren Lagermittel an der Kontaktfläche vergleichsweise reibungsfrei gelagert ist, so dass die beiden Lagermittel aufeinander gleiten können.

Denkbar ist allerdings auch, dass die Lagermittel miteinander fest verbunden sind. Sind die Lagermittel miteinander fest verbunden, so ist z.B. zumindest das erste Lagermittel und ein weiteres Lagermittel beweglich mit dem Überbau oder dem Unterbau gekoppelt.

In einer vorteilhaften Ausgestaltung der Erfindung ist ein Lagermittel in einem Querschnitt U-förmig ausgebildet. Denkbar ist auch, dass ein Lagermittel in einem Querschnitt W-förmig ausgebildet ist. Vorteilhafterweise ist das erste Lagermittel U-förmig oder W-förmig ausgestaltet.

Durch die U-förmige oder W-förmige Ausgestaltung der Lagermittel kann die Anzahl der Lagermittel reduziert werden, hierdurch ist die Dreheinheit vergleichsweise kostengünstig ausgebildet.

Ist ein Lagermittel U-förmig oder W-förmig ausgebildet, so ist der Überbau und/oder der Unterbau vorteilhafterweise 2-teilig ausgestaltet. Denkbar ist, dass der vorteilhaft plattenförmige Überbau und/oder der vorteilhaft plattenförmige Unterbau aus jeweils mindestens zwei plattenartigen, insbesondere gleichartigen Elementen besteht, wobei im zusammengesetzten Zustand der Drehvorrichtung der Überbau und/oder der Unterbau mit dem inneren Rand der Durchgangsöffnung voraus in die Aussparung des U's bzw. des W's eingeschoben oder eingesteckt sind. Hierdurch ist das erste Lagermittel in seiner Funktionsposition an der Drehvorrichtung festgelegt.

Auch ist es von Vorteil, dass ein Lagermittel in einem Querschnitt L-förmig ausgebildet ist. Hierdurch kann insbesondere das erste Lagermittel im montierten Zustand an der Drehvorrichtung in seiner Funktionsposition gehalten sein.

Weiter wird vorgeschlagen, dass die Lagermittel aus Kunststoff ausgebildet sind. Vorteilhafterweise besitzt der Kunststoff eine vergleichsweise reibungsarme Oberfläche mit niedrigem Reibungskoeffizient, insbesondere ist der Kunststoff Polyoxymethylen (POM). Denkbar ist auch, dass die Lagermittel einen vergleichsweise stabilen Metallkern enthalten, z.B. einen Stahlkern, welcher bspw. von Kunststoff umschlossen ist.

Auch ist es von Vorteil, dass die Dreheinheit eine Kraftübertragungseinheit aufweist, wobei die Kraftübertragungseinheit dazu vorgesehen ist, im montierten Zustand der Dreheinheit an der Drehvorrichtung die Lagermittel zu verspannen, wobei der Überbau und der Unterbau darin eingelegt sind. Die Kraftübertragungseinheit ist beispielsweise als Klammer ausgestaltet.

Des Weiteren ist es wesentlich, dass die Kraftübertragungseinheit ein Kraftübertragungselement umfasst, und das Kraftübertragungselement plattenförmig ausgebildet ist.

Bevorzugterweise ist ein Kraftübertragungselement als flaches, plattenartiges und aus einer Aufsicht vorteilhaft bananenförmiges oder kreisförmiges Element, beispielsweise in Form eines Teilkreises bzw. Segments, ausgeformt. Beispielsweise ist das Kraftübertragungselement eine Metallplatte. Denkbar ist auch, dass das Kraftübertragungselement in Form einer Unterlegscheibe ausgebildet ist. Insbesondere ist das Kraftübertragungselement aus einem vergleichsweise stabilen Material ausgebildet, z.B. aus Metall.

Weiter wird vorgeschlagen, dass die Kraftübertragungseinheit ein Verbindungselement umfasst, wobei das Verbindungselement dazu vorgesehen ist, im montierten Zustand der Dreheinheit an der Drehvorrichtung die Lagermittel kraftschlüssig zu verbinden. Vorteilhafterweise ist im montierten Zustand der Drehvorrichtung der Überbau mit dem Unterbau durch das Verbindungselement verspannbar, insbesondere über die Lagermittel. Das Verbindungselement kann beispielsweise als Bolzen und/oder Stift und/oder Schraube ausgestaltet sein.

In einer vorteilhaften Ausgestaltung der Erfindung ist der Überbau und/oder der Unterbau der Drehvorrichtung plattenförmig ausgestaltet, wobei der Überbau und/oder der Unterbau Hohlkammern umfasst. Durch die Ausgestaltung des Überbaus und/oder des Unterbaus als Hohlkammerplatte, wobei die Platte Kammern bzw. Waben und/oder Poren umfasst, ist eine vergleichsweise hohe Stabilität, insbesondere hinsichtlich auftretender Torsionskräfte, erzielbar. Insbesondere ist durch die Ausgestaltung des Überbaus und/oder des Unterbaus als Hohlkammerplatte eine Gewichtsreduktion der Drehvorrichtung erreicht. Vorstellbar ist weiter, dass der Überbau und/oder der Unterbau der Drehvorrichtung zumindest zu einem überwiegenden Teil aus einem Metallschaum hergestellt ist.

Insbesondere ist der Überbau und/oder der Unterbau aus einem Strangpress-Profil hergestellt. Vorteilhafterweise ist der Überbau und/oder der Unterbau aus Aluminium oder Kunststoff ausgebildet.

### Beschreibung des Ausführungsbeispiels

Ein Ausführungsbeispiel wird anhand der nachstehenden schematischen Zeichnungen unter Angabe weiterer Einzelheiten und Vorteile näher erläutert:
Es zeigen:
- Figur 1: eine perspektivische Ansicht von schräg oben auf eine erfindungsgemäße Drehvorrichtung mit einer Dreheinheit,
- Figur 2: eine perspektivische Ansicht von schräg oben und vorne auf die Drehvorrichtung nach Figur 1, wobei der Überbau zum Unterbau verdreht dargestellt ist,
- Figur 3: eine seitliche Ansicht auf die linke Seite der Drehvorrichtung nach Figur 1,
- Figur 4: eine Ansicht von Vorne auf die Drehvorrichtung nach Figur 1,
- Figur 5: eine perspektivische Ansicht von schräg oben auf ein erstes Lagermittel der Dreheinheit,
- Figur 6: eine Draufsicht auf die Drehvorrichtung nach Figur 1,
- Figur 7: eine seitliche Ansicht auf einen Schnitt nach Figur 6 durch die Drehvorrichtung nach Figur 1 und
- Figur 8: eine Detailansicht des Schnitts nach Figur 7 durch die Drehvorrichtung nach Figur 1.

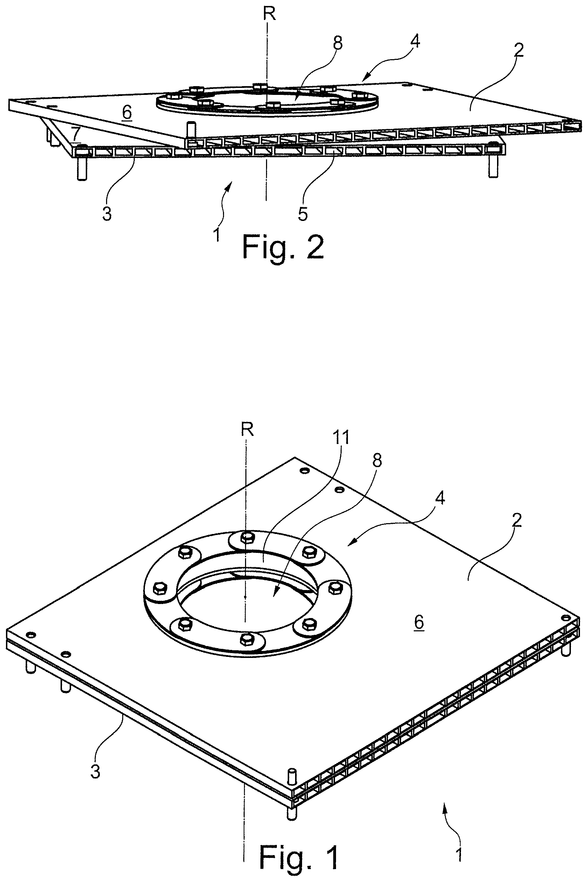

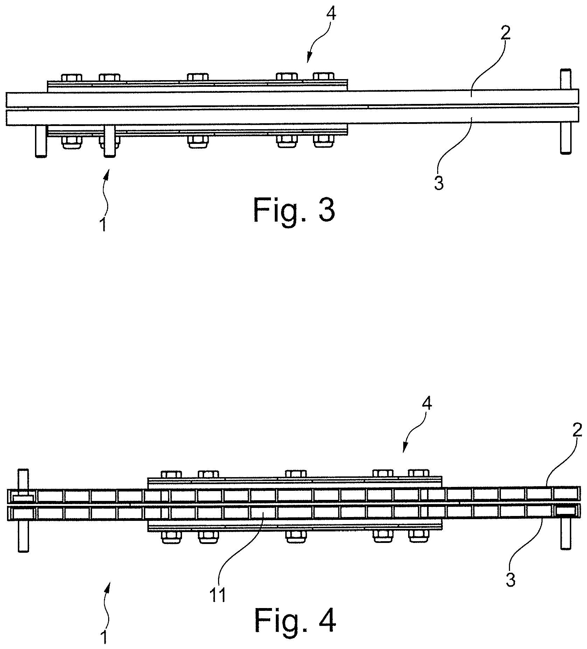

Eine Drehvorrichtung 1 umfasst einen z.B. plattenartigen Überbau 2, einen z.B. plattenartigen Unterbau 3 und eine erfindungsgemäße Dreheinheit 4, wobei der Überbau 2 mit dem Unterbau 3 über die Dreheinheit 4 drehbar verbunden ist (Figur 1 bis 4) .

Der Überbau 2 und der Unterbau 3 ist zum Beispiel in einem Strangpress-Verfahren bspw. aus Aluminium hergestellt. Durch das Strangpress-Verfahren sind in den plattenartigen Überbau 2 und den plattenartigen Unterbau 3 z.B. Hohlkammern 5 eingebracht.

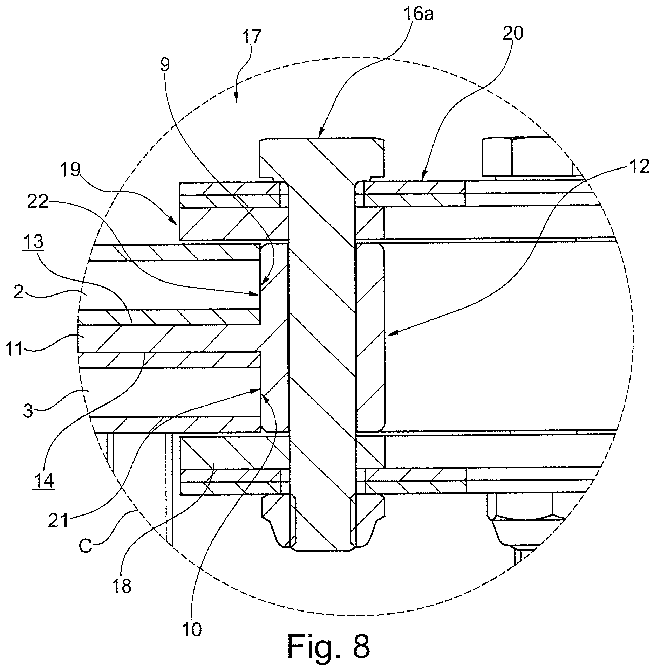

Eine Rotationsachse R der Dreheinheit 4 ist vorteilhaft senkrecht zu den großen flachen Oberseiten 6, 7 des Überbaus 2 und des Unterbaus 3 an der Drehvorrichtung 1 angeordnet. Die Rotationsachse R verläuft beispielsweise durch ein Zentrum einer Durchgangsöffnung 8 des Überbaus 2 und des Unterbaus 3. An der radial innen liegenden Seite der Durchgangsöffnung 8 besitzen der Überbau 2 und der Unterbau 3 einen inneren Rand 9, 10 (Figur 8).

Die Dreheinheit 4 umfasst ein erstes Gleitlager 11, ein zweites Gleitlager 18, ein drittes Gleitlager 19 und eine Kraftübertragungseinheit 17.

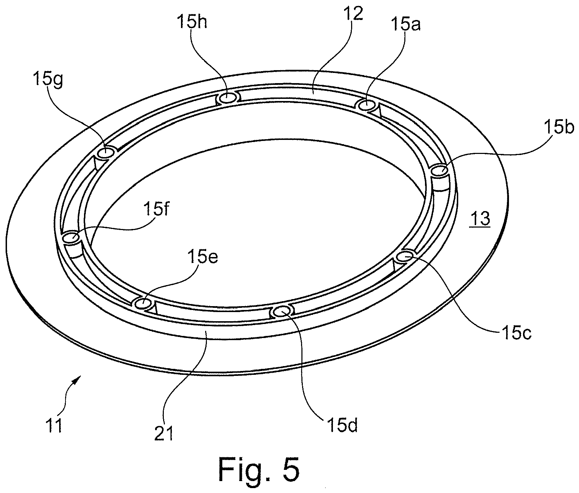

Der Überbau 2 und der Unterbau 3 sind z.B. mittels der Gleitlager 11, 18, 19 der Dreheinheit 4 um die Rotationsachse R drehbar gelagert (Figuren 1, 4, 5, 7, 8). Dabei ist das Gleitlager 11 zwischen dem Überbau 2 und dem Unterbau 3 montiert.

Das Gleitlager 11 ist vorteilhaft ringförmig ausgestaltet und umfasst in einem radial innen liegenden Bereich einen Wulst 12, welcher aus einer Oberfläche 13, 14 insbesondere gegenüberliegend nach oben und nach unten hervorsteht. Das Gleitlager 11 besitzt somit einen T-förmigen Querschnitt (Figur 8). Im zusammengebauten Zustand der Drehvorrichtung 1 stößt das Gleitlager 11 mit seinen radial außen liegenden Anlagefläche 21, 22 des Wulsts 12 an den inneren Rand 9 des Überbaus 2 und an den inneren Rand 10 des Unterbaus 3 an. Hierdurch ist es an seiner Funktionsposition an der Drehvorrichtung 1 festgelegt.

Die Oberflächen 13, 14 des Gleitlagers 11 sind als Gleitlagerflächen ausgebildet, durch welche der Überbau 2 und der Überbau 3 gleitend gelagert sind. Im Wulst 12 sind weiterhin Verbindungsöffnungen 15a - 15h eingebracht, durch welche im montierten Zustand der Dreheinheit 4 an der Drehvorrichtung 1 Verbindungselemente der Kraftübertragungseinheit 17 in Form von Schrauben 16a - 16h eingesteckt sind, welche z.B. über Muttern gekontert sind.

Das Gleitlager 18 und das Gleitlager 19 ist jeweils gegenüberliegend zu einer Gleitlagerfläche 13, 14 des Gleitlagers 11 an einer Außenseite des Überbaus 2 bzw. des Unterbaus 3 angeordnet. Hierdurch ist der Überbau 2 gleitend zum Gleitlager 11 und zum Gleitlager 19 gelagert und der Unterbau 3 ist gleitend zum Gleitlager 11 und zum Gleitlager 18 gelagert. Das zweite Gleitlager 18 und das dritte Gleitlager 19 sind z.B. in Form eines flachen Rings ausgestaltet. Im Querschnitt betrachtet (Figur 8) bilden die Gleitlager 11, 18, 19 im montierten Zustand an der Drehvorrichtung 1 somit z.B. eine W-Form aus.

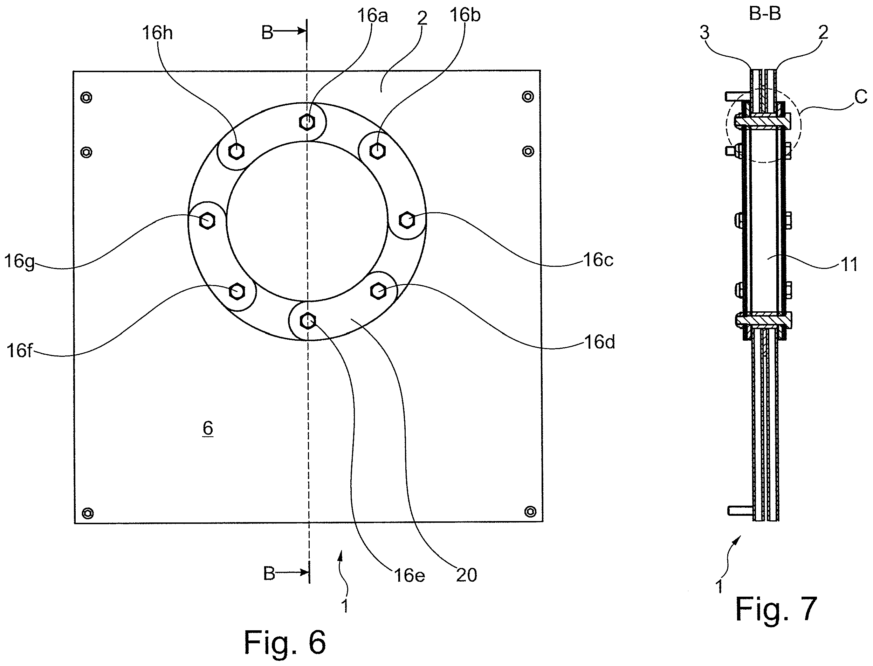

Die Kraftübertragungseinheit 17 umfasst, neben den Verbindungselementen Kraftübertragungselemente in Form von scheibenartigen Ringsegmenten 20. Die Ringsegmente 20, die Gleitlager 11, 18, 19, der Überbau 2 und der Unterbau 3 sind durch die Schrauben 16a - 16h beispielsweise sandwichartig oder paketartig miteinander verspannt (Figuren 6 bis 8). Zum einen ist hierdurch der Überbau 2 relativ zum Unterbau 3 in seiner Funktionsposition festgelegt, zum anderen kann durch die erzeugte Kraft, vorteilhaft parallel zur Rotationsachse R, der Schrauben 16a - 16h auf die Gleitlagerflächen der Gleitlager 11, 18, 19 und die Gleitlagerflächen des Überbaus 2 und des Unterbaus 3 die Reibwirkung bzw. Gleitwirkung der Gleitlagerflächen zueinander eingestellt werden.

Beispielsweise kann das Paket bestehend aus Ringssegmenten 20, Gleitlager 11, 18, 19, 2 und Unterbau 3 derart miteinander verspannt werden, dass im montierten Zustand im Fahrzeug bei Benutzung bzw. Gewichtsbelastung durch einen Nutzer bzw. durch das Körpergewicht eines Nutzers ein Verdrehen des Überbaus 2 relativ zum Unterbau 3 aufgrund der vergleichsweise hohen Reibwirkung der Gleitlagerflächen zueinander unterbunden ist.

### Bezugszeichenliste

- 1: Drehvorrichtung
- 2: Überbau
- 3: Unterbau
- 4: Dreheinheit
- 5: Hohlkammern
- 6 - 7: Oberseite
- 8: Durchgangsöffnung
- 9 - 10: Rand
- 11: Gleitlager
- 12: Wulst
- 13 - 14: Oberfläche
- 15a - 15h: Verbindungsöffnung
- 16a - 16h: Schraube
- 17: Kraftübertragungseinheit
- 18 - 19: Gleitlager
- 20: Ringsegment
- 21: Anlagefläche
- 22: Anlagefläche

## Patentansprüche

1. Drehvorrichtung (1) für einen Fahrzeugsitz, wobei die Drehvorrichtung (1) einen Unterbau (3) für ein Bodenteil zur Anbringung an einem Fahrzeugboden und einen Überbau (2), an welchem ein Sitz anbringbar ist, umfasst, wobei der Unterbau (3) mit dem Überbau über eine Dreheinheit (4) verbunden ist, wobei die Dreheinheit (4) ein erstes Lagermittel umfasst, wobei das erste Lagermittel als Gleitlager (11) ausgebildet ist und zwischen dem Überbau (2) und dem Unterbau (3) angeordnet ist, wobei der Überbau (2) und der Unterbau (3) im Bereich um eine Rotationsachse R der Drehvorrichtung (1) eine Durchgangsöffnung (8) aufweisen, und wobei das erste Lagermittel (11) in einer radialen Richtung, in Richtung der Rotationsachse R der Drehvorrichtung (1) über einen inneren Rand (9, 10) des Überbaus (2) und des Unterbaus (3) übersteht, wobei die Dreheinheit (4) zwei weitere Lagermittel (18, 19) aufweist, wobei die weiteren Lagermittel (18, 19) derart ausgebildet sind, dass der Überbau (2) und/oder der Unterbau (3) relativ zum weiteren Lagermittel (18, 19) bewegbar ist, **dadurch gekennzeichnet, dass** die weiteren Lagermittel (18, 19) als Gleitlager ausgebildet sind, wobei die weiteren Lagermittel (18, 19) gegenüberliegend zu einer Gleitlagerfläche (13, 14) des ersten Lagermittels (11) an einer Außenseite des Überbaus (2) bzw. an einer Außenseite des Unterbaus (3) angeordnet sind.

2. Drehvorrichtung (1) nach dem Anspruch 1, **dadurch gekennzeichnet, dass** das erste Lagermittel (11) ein Montageorgan (12) umfasst, wobei das Montageorgan dazu ausgelegt ist, das erste Lagermittel mit dem Überbau (2) und/oder dem Unterbau (3) für eine radiale Positionierung des ersten Lagermittels (11) zu verbinden.

3. Drehvorrichtung (1) nach einem der vorangegangenen Ansprüche, **dadurch gekennzeichnet, dass**
das erste Lagermittel (11) in einem Querschnitt T-förmig ausgestaltet ist.

4. Drehvorrichtung (1) nach einem der vorangegangenen Ansprüche, **dadurch gekennzeichnet, dass**
die Lagermittel (11, 18, 19) derart ausgestaltet sind, dass sie relativ zueinander bewegbar, insbesondere drehbar sind.

5. Drehvorrichtung (1) nach einem der vorangegangenen Ansprüche, **dadurch gekennzeichnet, dass**
ein Lagermittel (11, 18, 19) in einem Querschnitt U-förmig ausgebildet ist.

6. Dreheinheit (4) für eine Drehvorrichtung (1) nach einem der vorangegangenen Ansprüche, **dadurch gekennzeichnet, dass** ein Lagermittel (11, 18, 19) in einem Querschnitt L-förmig ausgebildet ist.

7. Drehvorrichtung (1) nach einem der vorangegangenen Ansprüche, **dadurch gekennzeichnet, dass**
die Lagermittel (11, 18, 19) aus Kunststoff ausgebildet sind.

8. Drehvorrichtung (1) nach einem der vorangegangenen Ansprüche, **dadurch gekennzeichnet, dass**
die Dreheinheit (4) eine Kraftübertragungseinheit (17) aufweist, wobei die Kraftübertragungseinheit (17) dazu vorgesehen ist, im montierten Zustand der Dreheinheit (4) an der Drehvorrichtung (1) die Lagermittel (11, 18, 19) zu verspannen, wobei der Überbau (2) und der Unterbau (3) darin eingelegt sind.

9. Drehvorrichtung (1) nach dem vorangegangenen Anspruch 8, **dadurch gekennzeichnet, dass** die Kraftübertragungseinheit (17) ein Kraftübertragungselement (20) umfasst, und das Kraftübertragungselement (20) plattenförmig ausgebildet ist.

10. Drehvorrichtung (1) nach einem der vorangegangenen Ansprüche 8 oder 9, **dadurch gekennzeichnet, dass** die Kraftübertragungseinheit (17) ein Verbindungselement (16a - 16h) umfasst, wobei das Verbindungselement (16a - 16h) dazu vorgesehen ist, im montierten Zustand der Dreheinheit (4) an der Drehvorrichtung (1) die Lagermittel (11, 18, 19) kraftschlüssig zu verbinden.

11. Drehvorrichtung (1) nach einem der vorhergehenden Ansprüche, **dadurch gekennzeichnet, dass** der Überbau (2) und/oder der Unterbau (3) plattenförmig ausgestaltet ist und der Überbau (2) und/oder der Unterbau (3) Hohlkammern (5) umfasst.

## Claims

1. Rotating device (1) for a vehicle seat, wherein the rotating device (1) comprises a substructure (3) for a base part for attachment to a vehicle floor and a superstructure (2) onto which a seat can be attached, wherein the substructure (3) is connected to the superstructure by means of a rotating unit (4), wherein the rotating unit (4) comprises a first bearing means, wherein the first bearing means is designed as a plain bearing (11) and is arranged between the superstructure (2) and the substructure (3), wherein the superstructure (2) and the substructure (3) have a through opening (8) in the area around an axis of rotation R of the rotating device (1), and wherein the first bearing means (11) protrudes in a radial direction in the direction of the axis of rotation R of the rotating device (1) over an inner edge (9, 10) of the superstructure (2) and the substructure (3), wherein the rotating unit (4) has two additional bearing means (18, 19), wherein the additional bearing means (18, 19) are designed such that the superstructure (2) and/or the substructure (3) can be moved relative to the additional bearing means (18, 19), **characterised in that** the additional bearing means (18, 19) are designed as plain bearings, wherein the additional bearing means (18, 19) are arranged opposite a plain bearing surface (13, 14) of the first bearing means (11) on an outer side of the superstructure (2) or on an outer side of the substructure (3).

2. Rotating device (1) according to claim 1, **characterised in that** the first bearing means (11) comprises a mounting element (12), wherein the mounting element is configured to connect the first bearing means to the superstructure (2) and/or the substructure (3) for radially positioning the first bearing means (11).

3. Rotating device (1) according to any of the preceding claims, **characterised in that** the first bearing means (11) is configured to be T-shaped in cross-section.

4. Rotating device (1) according to any of the preceding claims, **characterised in that** the bearing means (11, 18, 19) are configured such that they can move relative to one another, in particular are rotatable.

5. Rotating device (1) according to any of the preceding claims, **characterised in that** one bearing means (11, 18, 19) is designed to be U-shaped in cross-section.

6. Rotating unit (4) for a rotating device (1) according to any of the preceding claims, **characterised in that** one bearing means (11, 18, 19) is designed to be L-shaped in cross-section.

7. Rotating device (1) according to any of the preceding claims, **characterised in that** the bearing means (11, 18, 19) are made of plastic.

8. Rotating device (1) according to any of the preceding claims, **characterised in that** the rotating unit (4) has a power transfer unit (17), wherein the power transfer unit (17) is provided to tension the bearing means (11, 18, 19) in the mounted state of the rotating unit (4) on the rotating device (1), wherein the superstructure (2) and the substructure (3) are inserted therein.

9. Rotating device (1) according to the preceding claim 8, **characterised in that** the power transfer unit (17) comprises a power transfer element (20) and the power transfer element (20) is designed to be plate-like.

10. Rotating device (1) according to any of the preceding claims 8 or 9, **characterised in that** the power transfer unit (17) comprises a connecting element (16a - 16h), wherein the connecting element (16a - 16h) is provided to connect the bearing means (11, 18, 19) in a force-locking manner in the mounted state of the rotating unit (4) on the rotating device (1).

11. Rotating device (1) according to any of the preceding claims, **characterised in that** the superstructure (2) and/or the substructure (3) is configured to be plate-like and the superstructure (2) and/or the substructure (3) comprises hollow chambers (5).

## Revendications

1. Dispositif rotatif (1) pour un siège de véhicule, le dispositif rotatif (1) comprenant une base (3) pour une partie de plancher destinée à être fixée à un plancher de véhicule et une superstructure (2) sur laquelle peut être fixé un siège, la base (3) étant reliée à la superstructure par une unité rotative (4), ladite unité rotative (4) comprenant un premier moyen de palier, ledit premier moyen de palier étant conçu sous la forme d'un palier lisse (11) et étant disposé entre la superstructure (2) et la base (3), la superstructure (2) et la base (3) étant munies d'une ouverture de passage (8) dans la région située autour d'un axe de rotation R du dispositif rotatif (1), et le premier moyen de palier (11), dans une direction radiale, dépassant d'un bord intérieur (9, 10) de la superstructure (2) et de la base (3) dans la direction de l'axe de rotation R du dispositif rotatif (1), l'unité rotative (4) étant munie de deux moyens de palier supplémentaires (18, 19), lesdits moyens de palier supplémentaires (18, 19) étant conçus de telle sorte que la superstructure (2) et/ou la base (3) sont mobiles par rapport aux moyens de palier supplémentaires (18, 19), **caractérisé en ce que** les moyens de palier supplémentaires (18, 19) sont conçus sous la forme de paliers lisses, les moyens de palier supplémentaires (18, 19) étant disposés en regard d'une surface d'appui lisse (13, 14) du premier moyen de palier (11) sur une face extérieure de la superstructure (2) ou sur une face extérieure de la base (3).

2. Dispositif rotatif (1) selon la revendication 1, **caractérisé en ce que** le premier moyen de palier (11) comprend un élément de montage (12), ledit élément de montage étant conçu pour relier le premier moyen de palier à la superstructure (2) et/ou à la base (3) pour permettre le positionnement radial du premier moyen de palier (11).

3. Dispositif rotatif (1) selon l'une des revendications précédentes, **caractérisé en ce que** le premier moyen de palier (11), considéré en section transversale, est en forme de T.

4. Dispositif rotatif (1) selon l'une des revendications précédentes, **caractérisé en ce que** les moyens de palier (11, 18, 19) sont conçus de telle sorte qu'ils sont mobiles les uns par rapport aux autres, en particulier de façon rotative.

5. Dispositif rotatif (1) selon l'une des revendications précédentes, **caractérisé en ce qu'**un moyen de palier (11, 18, 19), considéré en section transversale, est en forme de U.

6. Unité rotative (4) pour un dispositif rotatif (1) selon l'une des revendications précédentes, **caractérisée en ce qu'**un moyen de palier (11, 18, 19), considéré en section transversale, est en forme de L.

7. Dispositif rotatif (1) selon l'une des revendications précédentes, **caractérisé en ce que** les moyens de palier (11, 18, 19) sont en matière plastique.

8. Dispositif rotatif (1) selon l'une des revendications précédentes, **caractérisé en ce que** l'unité rotative (4) est munie d'une unité de transmission de force (17), ladite unité de transmission de force (17) étant prévue pour, à l'état monté de l'unité rotative (4) sur le dispositif rotatif (1), serrer les moyens de palier (11, 18, 19), la superstructure (2) et la base (3) étant insérées entre ceux-ci.

9. Dispositif rotatif (1) selon la revendication 8 précédente, **caractérisé en ce que** l'unité de transmission de force (17) comprend un élément de transmission de force (20), et ledit élément de transmission de force (20) est en forme de plaque.

10. Dispositif rotatif (1) selon l'une des revendications précédentes 8 ou 9, **caractérisé en ce que** l'unité de transmission de force (17) comprend un élément de liaison (16a - 16h), ledit élément de liaison (16a - 16h) étant prévu pour, à l'état monté de l'unité rotative (4) sur le dispositif rotatif (1), relier par force les moyens de palier (11, 18, 19).

11. Dispositif rotatif (1) selon l'une des revendications précédentes, **caractérisé en ce que** la superstructure (2) et/ou la base (3) est en forme de plaque, et la superstructure (2) et/ou la base (3) comprend des cavités (5).
